# EUROPEAN PATENT APPLICATION

(11) **EP 4 715 699 A1**
(43) Date of publication of application: **25.03.2026**
(21) Application number: 25203607.4
(22) Date of filing: 22.09.2025
(51) Int. Cl.: G06Q 10/063, G06N 20/00, G06Q 30/0201

(54) **SYSTEM AND METHOD FOR AUTOMATED WISH PROCESSING AND EXECUTION**

(30) Priority: 20.09.2024 US 202463696875 P; 19.09.2025 US 202519333378
(71) Applicant: A.V. Mapping Co., LTD., Taipei City 105 (TW)
(72) Inventor: Li, Tzu-Hui, 104 Taipei City (TW)
(74) Representative: Straus, Alexander

(57) **Abstract**

A computer-implemented method and system for automated wish processing and execution are provided. User data including a wish is received and processed with one or more algorithms to determine at least one actionable solution corresponding to the wish. Structured digital content comprising execution plans, analyses, or templates is generated from the processed data and output in a format suitable for presentation on a user device.

## Description

### Field of the Invention

The present invention relates generally to computer-implemented systems, and more particularly to computer-implemented system and method for automated processing, execution, and feedback integration.

### Background of the Invention

Modern computing platforms increasingly rely on automation to integrate user preferences, enterprise services, and marketplace interactions. Existing systems, however, generally focus on narrow functions, such as task scheduling, content delivery, or e-commerce transactions, and lack a unified framework for converting personal or organizational goals into actionable outcomes.

One persistent problem is that users often have broad or abstract objectives, such as lifestyle improvement, health tracking, or launching a new product, but conventional tools provide no structured method for transforming those objectives into executable steps. Current applications tend to operate in silos, requiring manual coordination across multiple platforms. This fragmentation increases complexity, delays execution, and limits scalability.

Another problem is that feedback and validation are typically separated from execution. While some platforms offer user ratings or analytics, these mechanisms do not close the loop by refining future executions or by integrating funding, voting, or competitive mechanisms. Similarly, personal development aspects such as journaling, behavioral analysis, or wellness tracking are handled by stand-alone applications that are not integrated into a common execution framework.

In addition, conventional systems often raise concerns regarding transparency and trust. Many platforms depend on centralized operators that manage user data without adequate control by the user. This prevents democratic validation of outcomes and limits opportunities for equitable revenue sharing or secure record-keeping through distributed technologies.

Accordingly, there is a need for a comprehensive, computer-implemented system that would enable end-to-end automation, reduce reliance on fragmented applications, and create a closed-loop architecture that transforms aspirations into executable, validated, and measurable outcomes.

### Summary of the Invention

The invention is set out in the appended set of claims.

### Brief Description of the Drawings

The invention will now be described, by way of example only, with reference to the accompanying drawings, in which like reference numerals designate corresponding elements throughout the figures.
FIG. 1 illustrates the automated processing and execution system according to an embodiment.
FIG. 2 illustrates the wish input interface of FIG. 1 according to an embodiment.
FIG. 3 illustrates the processor module of FIG. 1 according to an embodiment.
FIG. 4 illustrates the generator module of FIG. 1 according to an embodiment.
FIG. 5 illustrates the output and sharing interface of FIG. 1 according to an embodiment.
FIG. 6 illustrates the automated processing and execution system according to an alternative embodiment.
FIG. 7 illustrates the analyzer module of FIG. 6 according to an embodiment.
FIG. 8 illustrates the market connector system of FIG. 6 according to an embodiment.
FIG. 9 illustrates the personal exploration system of FIG. 6 according to an embodiment.
FIG. 10 illustrates a flow diagram of a computer-implemented method for automated processing and execution according to an embodiment.

### Detailed Description

The present disclosure provides a detailed description of various embodiments. While specific implementation details are presented herein to facilitate a comprehensive understanding of the disclosure, it will be apparent to those skilled in the art that the present invention may be realized without necessarily adhering to all such particularities. In certain instances, well-established methods, procedures, components, and circuits have been omitted from exhaustive description to avoid obscuring the present disclosure. It should be understood that technical features individually described in relation to a single drawing may be implemented either discretely or in combination with other features, as set forth in the present specification.

### System Architecture

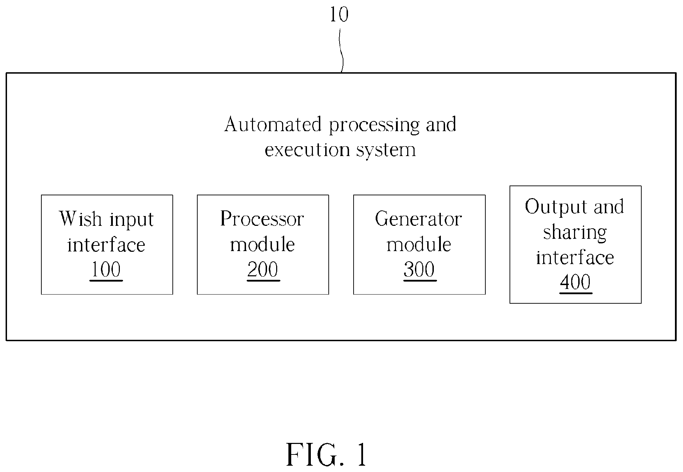

FIG. 1 illustrates an automated processing and execution system 10 according to an embodiment of the present invention. The system 10 is implemented in a computing environment and is configured to transform user wishes into structured outputs through a sequence of functional components. As shown, the system 10 includes a wish input interface 100, a processor module 200, a generator module 300, and an output and sharing interface 400.

The wish input interface 100 enables entry of a user wish or goal into the system 10. The processor module 200 executes algorithms to analyze the user data associated with the wish. The generator module 300 creates structured digital content based on the results of the analysis. The output and sharing interface 400 presents the structured digital content in a format suitable for display or dissemination on a user device.

In the embodiment shown, components 100 through 400 provide the core framework of the system 10 for automated processing and execution. Each component will be described in further detail in the following paragraphs.

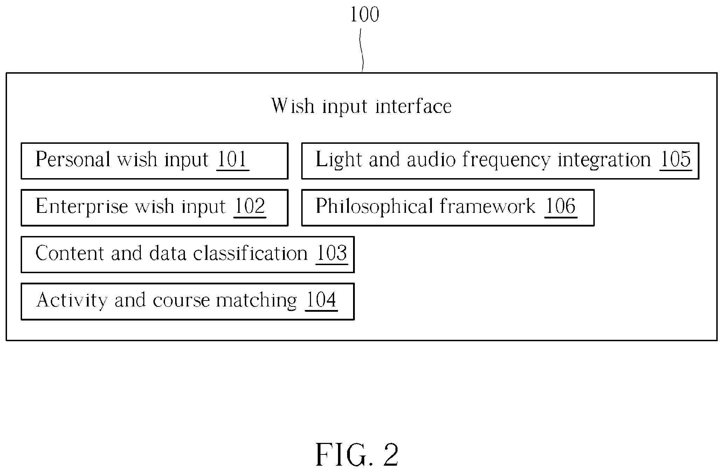

FIG. 2 illustrates a wish input interface 100 according to an embodiment of the present invention. The wish input interface 100 provides a structured entry environment through which a user may define and submit a wish, goal, or objective into the automated processing and execution system. In the embodiment shown, the wish input interface 100 includes a personal wish input 101, an enterprise wish input 102, a content and data classification 103, an activity and course matching 104, a light and audio frequency integration 105, and a philosophical framework 106.

The personal wish input 101 can capture aspirations or goals of an individual user. Such goals may include health improvement, creative development, educational advancement, or lifestyle changes. The personal wish input 101 may be presented as a graphical user interface with selectable fields, free-text entry, or guided prompts to assist a user in articulating personal objectives with clarity.

The enterprise wish input 102 may support organizational or business-related goals. Examples can include sustainability initiatives, product launches, market expansion, or talent development programs. The enterprise wish input 102 may accept structured data from enterprise systems or may allow designated users to submit objectives aligned with corporate strategy.

The content and data classification 103 can organize received wishes into categories and hierarchies. This component may apply rules or machine learning algorithms to classify wishes according to attributes such as subject matter, urgency, resource requirements, or feasibility. Classification enables the system to route input efficiently to appropriate processing and generation pathways.

The activity and course matching 104 can associate submitted wishes with executable activities. For example, a wish for stress reduction may be matched with a meditation course, while a corporate goal for skill development may be matched with training modules. The activity and course matching 104 may employ keyword matching, collaborative filtering, or semantic analysis to align user goals with available resources.

The light and audio frequency integration 105 may provide optional enhancements to the user experience through multimodal inputs. For instance, the system may generate audio tones, binaural beats, or light-based cues that correspond to the user's stated wish. Such integration can support therapeutic, motivational, or immersive effects, and may also provide data points for further analysis of user engagement.

In some embodiments, the content and data classification 103 may be configured to receive and organize user-submitted information in a variety of formats. The data may include, but is not limited to, text, images, videos, audio recordings, music files, or other multimedia formats. Classification may be based on metadata, semantic tags, or contextual attributes so that the system can flexibly process both structured and unstructured inputs.

By contrast, the light and audio frequency integration 105 may be directed not merely to data formats, but to the incorporation of sensory or frequency-based stimuli. In certain embodiments, visual light patterns, color frequencies, or video-derived luminance signals may be combined with audio frequencies or musical tones to create an immersive feedback environment.

The philosophical framework 106 establishes the conceptual foundation of the wish input interface. In some embodiments, the framework can emphasize non-material outcomes such as personal growth, community benefit, or sustainability impact. By incorporating such a framework, the system may guide users toward holistic definitions of wishes that extend beyond immediate material outputs.

Together, components 101 through 106 enable the wish input interface 100 to function as a versatile entry point for both personal and enterprise users. These components support structured input, intelligent classification, activity association, experiential enhancement, and conceptual alignment, thereby initiating the automated processing and execution cycle in a comprehensive manner.

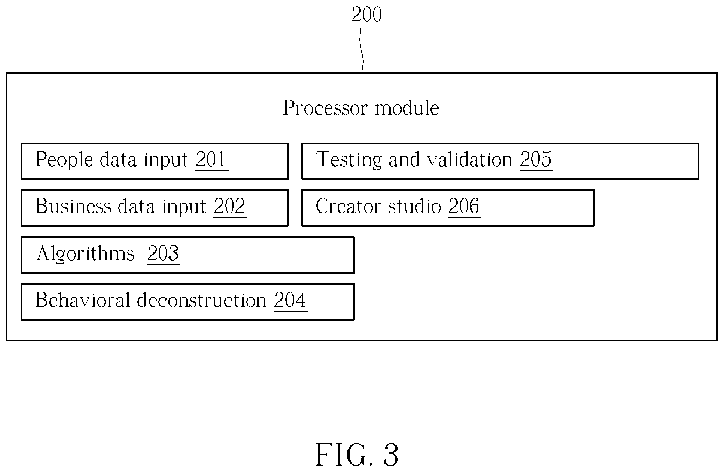

FIG. 3 illustrates a processor module 200 according to an embodiment of the present invention. The processor module 200 is responsible for analyzing user data, interpreting wishes, and preparing actionable outputs for subsequent generation. In the embodiment shown, the processor module 200 includes people data input 201, business data input 202, algorithms 203, behavioral deconstruction 204, testing and validation 205, and a creator studio 206.

The people data input 201 may collect and process individual user information. Such information can include demographic data, user preferences, behavioral history, psychological assessments, or wellness indicators. The people data input 201 can normalize heterogeneous data sources so that subsequent analysis can be performed consistently across multiple users.

In some embodiments, the people data input 201 may further include publicly available social media content, provided that the user has agreed to share such information with the system. The social media content may encompass posts, comments, likes, images, videos, or other publicly visible materials. By incorporating this information, the system may analyze user behaviors, preferences, interests, and expressed thoughts, as well as multimedia elements such as shared images or videos. This analysis may enable a more comprehensive understanding of user characteristics and context, thereby improving the accuracy of actionable solution identification.

The business data input 202 may gather organizational and market-oriented data. This can include enterprise objectives, product specifications, market conditions, resource availability, or regulatory considerations. The business data input 202 enables the system to align user or enterprise wishes with broader strategic and commercial contexts.

The algorithms 203 can be employed to process user and business data in a transparent and adaptable manner. Such algorithms may include clustering, classification, recommendation, and semantic analysis. Because the algorithms can be open-source, they may be updated, audited, or extended by external contributors, ensuring fairness, transparency, and adaptability of the analysis process.

In some embodiments, algorithms 203 may include a multi-dimensional psychological mapping algorithm designed to classify user responses into distinct philosophical types and to evaluate compatibility across individuals. The algorithm may employ a multi-dimensional classification model utilizing scoring matrices to map individual responses to philosophical categories. In one implementation, an assessment may contain various items, each having multiple response options, corresponding respectively to philosophical frameworks such as Platonic Fusion, Existential Freedom, Idealistic Transcendence, Proustian Temporality, Psychoanalytic, and Critical Deconstruction. The assessment design may follow a balanced distribution matrix to ensure equal representation of each philosophical type across question domains. Each response option may undergo philosophical validation against established academic literature to maintain theoretical fidelity, and semantic embedding techniques may be used to map each option to a philosophical type based on expert-validated conceptual frameworks.

In some embodiments, a compatibility engine may further implement a symmetric matrix structure to store pre-computed coefficients for pairwise combinations of philosophical types. Compatibility may be determined by combining philosophical opposition analysis, complementarity assessment, and conflict potential evaluation. For instance, high compatibility (e.g., score between 0.8-1.0) may reflect synergistic alignment, medium compatibility (0.4-0.7) may reflect workable differences, and low compatibility (0.0-0.3) may reflect fundamental conflicts.

In some embodiments, algorithms 203 may also include a dynamic content generation, open-sources model and personalization engine. This engine may combine primary type characteristics with secondary type modifiers through a weighted influence model (e.g., 70% from the primary type and 30% from the secondary type). A rule-based natural language generation system may be employed to generate narrative reports, predictions, and book recommendations aligned with philosophical affinity matching. In some embodiments, curated reading lists may be derived through academic citation analysis and thematic scoring.

The behavioral deconstruction 204 may break down user wishes into measurable components. For example, a wish can be analyzed along feasibility, engagement, and impact dimensions, which may be expressed as coordinates or variables in a multidimensional framework. This allows the system to represent abstract objectives in a structured and quantifiable form.

The testing and validation 205 can evaluate preliminary outputs before they are passed to subsequent modules. Testing may involve simulation, A/B comparison, or expert review, while validation may involve user feedback or system benchmarks. This component ensures that identified actionable solutions meet reliability, accuracy, and relevance thresholds.

The creator studio 206 may provide tools for generating, refining, or customizing intermediate outputs. Users or enterprises can use the creator studio 206 to design content, adjust parameters, or integrate external data. In some embodiments, the creator studio 206 may include AI-assisted content generation, enabling rapid creation of draft reports, summaries, or media elements linked to the user's wish.

In some embodiments, the creator studio 206 may provide an environment for content creation and editing. The creator studio 206 may support multiple input and output formats, including audio, video, text, image, and other multimedia data. The creator studio 206 may be implemented as a web-based platform, a mobile application, or a desktop environment, and may be configured to enable users to upload, edit, annotate, or generate content using integrated tools. In certain embodiments, the creator studio 206 may further interface with algorithms 203 to apply automated processing such as recommendation, enhancement, or formatting, thereby allowing both manual and algorithm-assisted content generation. Together, components 201 through 206 enable the processor module 200 to transform diverse user and enterprise inputs into structured, validated, and ready-to-use data. This processed data may then be provided to the generator module for the creation of structured digital content in the subsequent stage of the system.

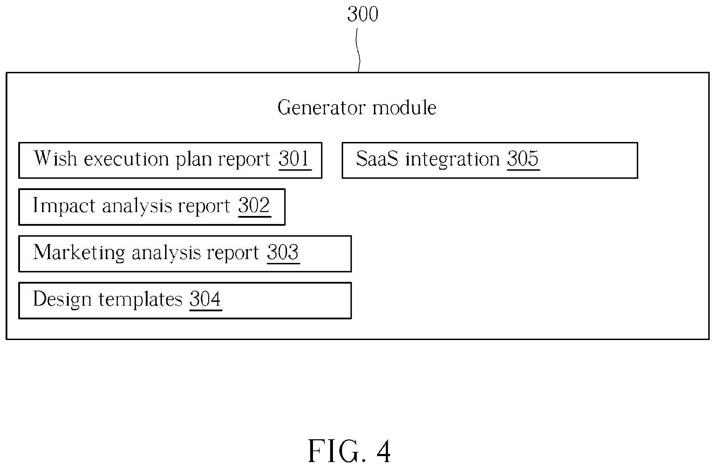

FIG. 4 illustrates a generator module 300 according to an embodiment of the present invention. The generator module 300 may produce structured digital content based on data processed by the processor module. In the embodiment shown, the generator module 300 can include a wish execution plan report 301, an impact analysis report 302, a marketing analysis report 303, design templates 304, and SaaS integration 305.

The wish execution plan report 301 may provide step-by-step guidance for fulfilling a user wish. Such a report can include milestones, recommended resources, timelines, and task allocations. In certain embodiments, the execution plan report 301 may be updated dynamically in response to additional data or feedback.

The impact analysis report 302 may evaluate potential and realized outcomes of a wish execution. The evaluation can involve personal improvements, enterprise benefits, environmental effects, or social influence. The impact analysis report 302 may incorporate quantitative metrics, qualitative assessments, or a combination of both to provide a comprehensive view of results.

The marketing analysis report 303 can be generated in cases where a wish involves enterprise or commercial objectives. This report may provide insights into market positioning, audience targeting, competitive landscape, or revenue opportunities. The marketing analysis report 303 may assist enterprises in launching new initiatives or validating proposed strategies against market data.

The design templates 304 may provide pre-structured visual or textual frameworks for presenting results. Templates can include slide decks, infographics, workflow charts, or interactive dashboards. Users or enterprises may adapt design templates 304 to customize communication of outcomes while maintaining consistency and efficiency.

The SaaS integration 305 may allow the generator module 300 to interact with external software-as-a-service platforms. Examples can include project management tools, customer relationship management systems, educational platforms, or financial applications. Through SaaS integration 305, generated content may be transferred automatically to external systems for further use, execution, or monitoring.

In combination, components 301 through 305 may enable the generator module 300 to transform processed data into tangible and adaptable outputs. These outputs may be delivered to the output and sharing interface for presentation or dissemination across various channels.

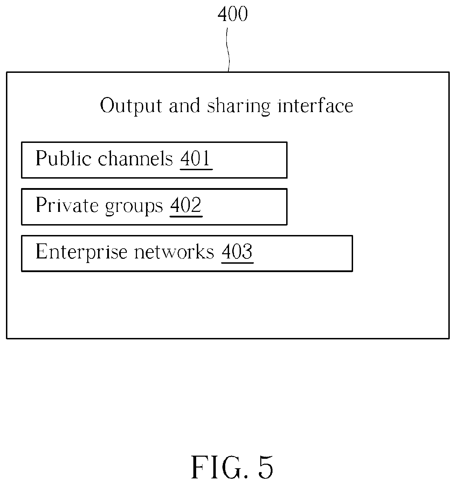

FIG. 5 illustrates an output and sharing interface 400 according to an embodiment of the present invention. The output and sharing interface 400 may present structured digital content generated by the system in formats suitable for user consumption or dissemination. In the embodiment shown, the output and sharing interface 400 can include public channels 401, private groups 402, and enterprise networks 403.

The public channels 401 may provide mechanisms for distributing generated content openly to a broad audience. Examples can include social media platforms, public websites, or newsletters. The public channels 401 may allow a user to share outcomes such as execution reports, analyses, or creative works for community viewing, discussion, or validation.

In some embodiments, the public channels 401 may further comprise a referral and link-sharing system incorporating multi-layered attribution and cryptographic verification. Each referral link may embed a unique identifier generated by the system and cryptographically associated with a referrer account. When a downstream user activates the referral link, attribution data may be recorded through server-side logging, device fingerprinting, or blockchain-based timestamping. In certain implementations, the identifier may be encoded using asymmetric cryptography, wherein a private key signs the referral data and a public key is used for verification by the merchant server prior to crediting the referrer. This cryptographic scheme may ensure that referral records are tamper-resistant, verifiable, and resistant to spoofing. To support large-scale deployments, probabilistic data structures may be employed to correlate referral clicks with conversion events under high traffic conditions.

The revenue-sharing logic associated with public channels 401 may be implemented through a dynamic payout mechanism that automatically allocates proceeds among stakeholders. For example, when a product or template is purchased through a referral link, the system may distribute revenue such that the original creator receives a primary share (e.g., 60%) while the referrer receives a secondary share (e.g., 10%), with remaining portions allocated to platform operators or service providers. In some embodiments, payout weights may be dynamically adjusted according to behavioral metrics such as time of engagement, repeat purchases, or community ranking of the referrer. The private groups 402 may allow controlled sharing of generated content within a restricted set of users. These groups can include family, friends, teams, or collaborators, and may be managed through access permissions. The private groups 402 may be useful when sensitive content is to be shared selectively, or when a wish involves collaborative review before broader release.

The enterprise networks 403 may enable dissemination of structured digital content within professional or organizational environments. For instance, an enterprise network 403 can distribute project plans, marketing reports, or training modules internally to employees or externally to partners. Enterprise networks 403 may also integrate with corporate systems, such as project management tools or customer relationship platforms, to align generated outputs with ongoing operations.

Together, subcomponents 401 through 403 may enable the output and sharing interface 400 to provide flexible dissemination pathways tailored to the intended audience. Content may be directed outward to public platforms, selectively to private groups, or strategically within enterprise systems, thereby completing the transformation of a user wish into actionable and communicable results.

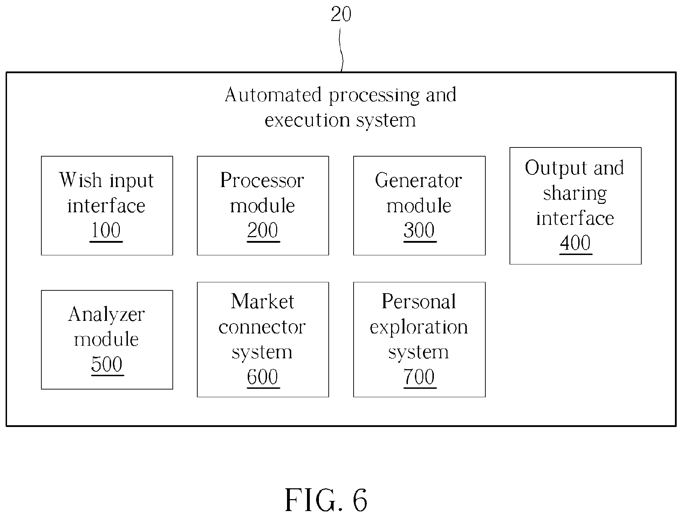

FIG. 6 illustrates an automated processing and execution system 20 according to an alternative embodiment of the present invention. In this embodiment, the system 20 may include the previously described components of a wish input interface 100, a processor module 200, a generator module 300, and an output and sharing interface 400. In addition, the system 20 may further include an analyzer module 500, a market connector system 600, and a personal exploration system 700.

The analyzer module 500 may provide functionality for monitoring outcomes associated with generated digital content and user interaction. This module can support evaluation of performance, generation of success metrics, and identification of behavioral patterns for refining subsequent executions.

The market connector system 600 may extend the system into a community and commerce layer. This component can support validation of user wishes, competitive ranking, expert or community review, crowdfunding, and transparent revenue sharing. By integrating such features, the market connector system 600 may enable selected wishes to move from planning into execution with external participation and support.

The personal exploration system 700 may complement wish execution with user-focused growth and self-development. This component can support journaling, assessments, wellness tracking, and educational or mentorship activities, thereby enabling users to monitor spiritual, mental, and physical progress in connection with their wishes.

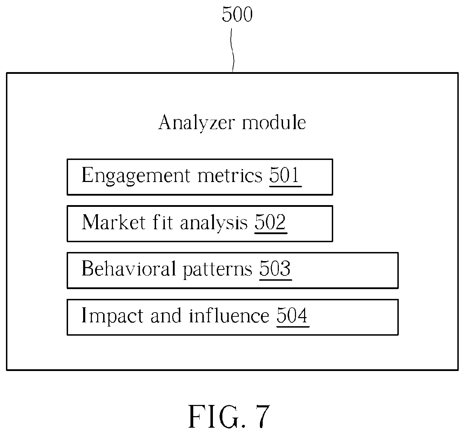

FIG. 7 illustrates an analyzer module 500 according to an embodiment of the present invention. The analyzer module 500 may be responsible for monitoring, interpreting, and evaluating outcomes associated with the generation and dissemination of digital content within the automated processing and execution system. In the embodiment shown, the analyzer module 500 can include engagement metrics 501, market fit analysis 502, behavioral patterns 503, and impact and influence 504.

The engagement metrics 501 may track how users interact with structured digital content produced by the system. Such metrics can include view counts, completion rates, participation levels, or frequency of interaction. Engagement metrics 501 may allow the system to measure user involvement and provide quantitative evidence of wish adoption.

The market fit analysis 502 may evaluate the degree to which a generated output aligns with market demands or expectations. This analysis can include sales data, user surveys, or expert evaluations. In enterprise contexts, the market fit analysis 502 may be applied to determine the commercial viability of a wish execution, such as the acceptance of a proposed product or service.

The behavioral patterns 503 may identify trends or responses exhibited by users during or after exposure to generated content. Such patterns can involve psychological responses, sentiment, or decision-making tendencies. The behavioral patterns 503 may be analyzed over time to reveal insights about user motivation or adoption behavior.

The impact and influence 504 may measure extended outcomes of a wish execution, beyond immediate user interaction. For example, this component may account for community benefits, environmental contributions, or secondary effects such as knowledge sharing or carbon reduction. The impact and influence 504 may combine quantitative and qualitative factors to provide a holistic picture of outcomes.

The analyzer module 500 may thereby enable iterative refinement of subsequent wish processing and execution, ensuring continuous improvement and adaptation to user and market contexts.

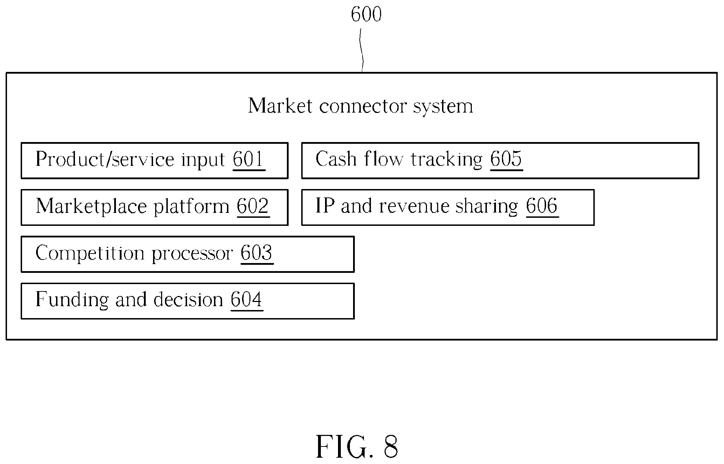

FIG. 8 illustrates a market connector system 600 according to an embodiment of the present invention. The market connector system 600 may provide mechanisms for validating, funding, and scaling user wishes within a broader community or marketplace environment. In the embodiment shown, the market connector system 600 can include product/service input 601, marketplace platform 602, competition processor 603, funding and decision 604, cash flow tracking 605, and IP and revenue sharing 606.

The product/service input 601 may allow users or enterprises to introduce products, services, or project concepts that correspond to a submitted wish. The product/service input 601 can accept structured data describing specifications, goals, and resource requirements.

The marketplace platform 602 may display submitted wishes or offerings in a format visible to other participants. Listings can include descriptions, deadlines, budgets, or ranking criteria. The marketplace platform 602 may provide transparency and accessibility, enabling community members or stakeholders to evaluate available options.

The competition processor 603 may allow wishes or projects to be ranked or compared through community voting, expert review, or algorithmic scoring. The competition processor 603 may support contests, leaderboards, or challenge-based formats, thereby encouraging high-quality submissions and democratic selection.

The funding and decision 604 may provide mechanisms for allocating resources to selected wishes. This can include crowdfunding campaigns, investor commitments, or institutional sponsorships. The funding and decision 604 may further record outcomes of voting or reviews and translate them into actionable financial or logistical commitments.

The cash flow tracking 605 may monitor the distribution of funds associated with wish execution. Cash flow tracking 605 can include transparent reporting of incoming contributions, expenditures, and balances, ensuring accountability and trust in the system.

The IP and revenue sharing 606 may provide automated mechanisms for distributing intellectual property rights or revenue generated by executed wishes. This may include smart contracts, licensing frameworks, or tokenized ownership models. By enabling equitable sharing, the IP and revenue sharing 606 may foster collaboration and encourage participation.

Components 601 through 606 allow the market connector system 600 to integrate validation, funding, and accountability into the automated processing and execution system. This can transform abstract wishes into actionable projects supported by community input, expert review, and transparent financial mechanisms.

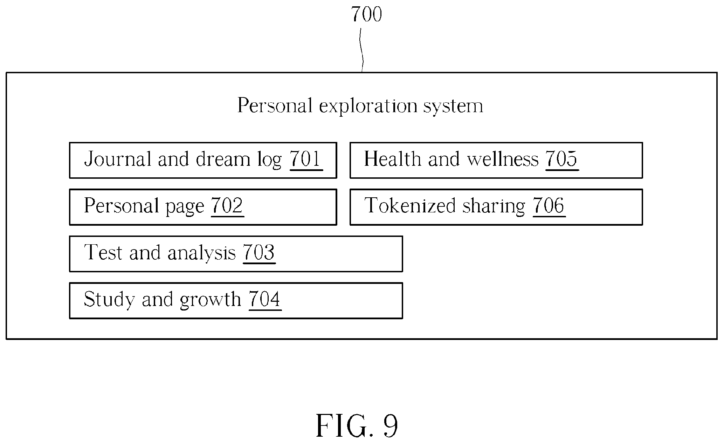

FIG. 9 illustrates a personal exploration system 700 according to an embodiment of the present invention. The personal exploration system 700 may enable users to monitor and develop spiritual, mental, and physical growth in connection with the execution of wishes. In the embodiment shown, the personal exploration system 700 can include a journal and dream log 701, a personal page 702, a test and analysis 703, a study and growth 704, a health and wellness 705, and a tokenized sharing 706.

The journal and dream log 701 may provide a digital space for users to record personal reflections, goals, or dream narratives. Such entries can serve as qualitative data for self-discovery and may be referenced in later analyses of user growth.

The personal page 702 may present a customized feed or dashboard summarizing a user's wishes, progress, and related insights. The personal page 702 can aggregate outputs from other modules to give the user a coherent view of their ongoing development.

The test and analysis 703 may allow users to complete assessments such as psychological profiles, behavioral surveys, or skills evaluations. Results can be analyzed to generate feedback, which may guide future wish input or refine system recommendations.

The study and growth 704 may provide educational and developmental resources. Examples can include courses, mentorship programs, interactive workshops, or reading materials. Study and growth 704 may align with a user's wishes to encourage skill-building and holistic improvement.

The health and wellness 705 may support tracking of physical and mental well-being. This can include monitoring exercise, diet, mindfulness practices, or stress management. Health and wellness 705 may generate recommendations or alerts to support a user's overall balance and productivity.

The tokenized sharing 706 may enable users to receive recognition or rewards for contributions to the system. This can include issuing tokens for journal entries, completed activities, or collaborative inputs. Tokenized sharing 706 may promote community participation and provide incentives for long-term engagement.

Components 701 through 706 allow the personal exploration system 700 to extend the automated processing and execution system beyond transactional outcomes, fostering sustained personal growth and well-being for users.

### Structure for Wish Evaluation

In some embodiments, the automated processing and execution system (e.g., system 10 or 20) may employ a structured framework for evaluating user-submitted wishes or projects. The framework can include a classification table and a multi-step decision-making process that enables transparent and systematic progression from input to market launch.

For example, each submitted wish may be evaluated on three primary coordinates:

| **Coordinate** | **Description** | **Example Criteria** |
|---|---|---|
| **X (Feasibility)** | Technical and logistical practicality of execution | Available resources, time, budget |
| **Y (Engagement)** | Level of interest or commitment anticipated from users and collaborators | Community relevance, expected participation, social alignment |
| **Z (Impact)** | Broader significance and value of the wish once realized | Personal benefit, enterprise advantage, environmental or societal contribution |

The automated processing and execution system may normalize each coordinate into a numerical or categorical score. This classification may enable comparison across different wishes or projects using a three-dimensional evaluation space.

In operation, a user may first submit a wish or project through the wish input interface, providing descriptive information, objectives, and any relevant resource data. The system may then analyze the submission by assigning values along three coordinates-feasibility, engagement, and impact-thereby generating an X, Y, Z representation of the wish. Based on these coordinates, algorithms may match the wish with suitable resources, collaborators, or opportunities. Once matched, the system may generate a structured digital plan including milestones, timelines, and recommended actions. In some embodiments, the system may further initiate automated execution of the plan by transmitting notifications or execution requests to corresponding collaborators, enterprises, or APIs. For example, in the case of a film production wish, the system may automatically notify scriptwriters, directors, producers, actors, sound engineers, and marketing agencies to begin assigned tasks, while also triggering automated processes such as digital contract signing, financial settlement, or logistics coordination through connected systems. Users may monitor execution progress through the interface and ultimately receive the completed output, such as a finished video, which may also be published automatically to designated accounts or platforms. Following execution, the wish or project may undergo review by community members and domain experts, who may validate the project through voting, ranking, or commentary. Projects that achieve sufficient validation and resourcing may then be launched into the marketplace, where performance can be monitored and results may be fed back into the analyzer module for continuous refinement.

### Technology Stack and Integration

In some embodiments, the automated processing and execution system (e.g., automated processing and execution system 10 or 20) may operate on a multilayer technology stack designed for scalability and interoperability. The infrastructure layer may include cloud computing resources that provide storage, networking, and elastic processing power. An artificial intelligence layer may perform natural language processing, behavioral analysis, and recommendation matching to support classification and plan generation. A blockchain layer may be integrated to ensure transparency, immutability, and traceability of transactions, voting results, or revenue sharing. An Internet of Things (IoT) layer may connect external devices, sensors, or enterprise systems to supply real-time contextual data. A virtual and augmented reality layer may optionally provide immersive experiences for training, wellness activities, or visualization of wish outcomes. These layers may be orchestrated through standardized APIs and middleware that allow seamless integration with external platforms such as software-as-a-service applications, enterprise resource planning systems, and third-party marketplaces. By employing this stack, the system may deliver an extensible and modular framework that supports end-to-end automation while maintaining adaptability across diverse user and enterprise environments.

### Use Cases and Applications

In some embodiments, the automated processing and execution system may be applied across both personal and enterprise contexts to demonstrate the breadth of its functionality. For example, in a personal use case, a user may submit a wish to reduce stress. The system may analyze the input, classify it along feasibility, engagement, and impact dimensions, and then generate a structured execution plan that can include a thirty-day mindfulness course, daily journaling prompts, and wellness tracking through the personal exploration system. he system may then further initiate automated execution of plan elements, the user may be prompted to confirm attendance and, upon agreement or payment at a yoga session, the system may automatically add the session to the user's calendar, reserve a spot with the yoga provider, and generate any required booking confirmations. As a result, the user may directly attend the activity without manual scheduling. Progress may then be measured using engagement metrics and health indicators, with collected feedback reinforcing subsequent improvements.

In an enterprise use case, a company may submit a wish to launch a sustainable product. The system may evaluate the project based on resource requirements and market impact, and then generate a structured execution plan including sourcing strategies, supply chain milestones, and expected carbon-reduction metrics. The system may further initiate automated execution, automatically send purchase orders to certified suppliers, schedule logistics through integrated transport platforms, and generate draft contracts for supplier execution. The system may also trigger marketing workflows by automatically booking advertising slots, publishing promotional content across enterprise channels, or reserving event spaces for product demonstrations. The company may monitor execution progress through a dashboard, while community and expert validation in the marketplace may further provide voting, ranking, or sponsorship. Upon successful completion, the product may be launched directly into market channels, with results tracked and fed back into the analyzer module for refinement.

### Marketplace Function

In some embodiments, the automated processing and execution system (e.g., system 10 or 20) may include a marketplace framework that integrates multiple forms of evaluation, competition, and transaction. The marketplace may incorporate evaluation reports, competition mechanisms, and gold flow transactions that enable ranking and validation of submitted projects or content. Rankings may reflect different dimensions, such as a strategy market ranking that highlights the efficiency and cost of strategy execution, or a music ranking in the content market that reflects popularity, audience characteristics, and energy frequency analysis. The marketplace may support products, services, events, strategies, design templates, currencies, and creative content within a unified environment. Enterprise-oriented behaviors may include software, applications, services, products, and activities, while lifestyle behaviors may include the adoption of solutions and equipment that improve everyday efficiency, such as household appliances or local storage alternatives. The marketplace may also support currency exchange across legal tender, virtual currencies, and goods, including second-hand items or digital assets such as non-fungible tokens, while content exchange may extend to games, newsletters, films, music, and other creative works.

In some embodiments, restrictions may be imposed to enhance efficiency and ensure quality of interactions. Such restrictions may include limiting partner SaaS software to exclude advertisements, pop-up windows, or unnecessary login requirements, allowing users to filter out undesired content such as negative posts, and requiring merchants to comply with thematic constraints, such as offering only environmentally oriented or recycled products. Through these mechanisms, the marketplace may provide a transparent and adaptive environment that validates user wishes, enables competition, facilitates secure financial exchanges, and aligns with user values and preferences.

### Technical Process and User Procedures

In some embodiments, the automated processing and execution system (e.g., system 10 or 20) may implement a technical process that integrates AI and IoT technologies to enable adaptive automation. Sensors, wearables, and environmental monitors may collect data on occupancy, air quality, noise levels, and user activity, while machine learning algorithms may analyze the data to predict needs, optimize schedules, and personalize experiences. An automation engine may generate smart triggers to adjust environmental variables such as lighting, music, temperature, and notifications according to time of day, user preferences, or task requirements. The system may further support personalization through user profiles that store individual preferences for workplace conditions, including music, lighting, temperature, and break schedules. Based on detected task types such as coding, designing, or writing, the system may adapt the surrounding environment by adjusting display brightness, soundscapes, or focus aids, while wearables and desk sensors may monitor posture, stress levels, and activity to provide real-time advisory for health and wellbeing.

In some embodiments, food and nutrition automation may be incorporated. Connected kitchen appliances and auto-machines may prepare customized meals based on dietary needs, while artificial intelligence may match food orders with local restaurants optimized for speed, cost, and dietary restrictions. Caloric intake and medication adherence may be supported by automated scanning of meals and reminders for scheduled medication. The system may also provide event and recreation management by automatically scheduling spaces for activities such as music clubs, reading groups, or workshops, and by configuring the environment accordingly. Virtual reality and augmented reality features may enhance these events by enabling immersive collaboration, training, or participation across distributed locations. Sustainability optimization may also be integrated, wherein heat exchange systems may repurpose data center heat for warming offices or heating water, while smart lighting and climate controls may adapt to occupancy and natural light conditions, thereby reducing energy consumption and improving environmental efficiency.

In some embodiments, the automated processing and execution system (e.g., system 10 or 20) may enable a technical process for creation, distribution, and monetization of digital content. Creators such as musicians, artists, and filmmakers may generate works including music, videos, art, or films, which may then be uploaded to the platform for tokenization, listing, or streaming. Artificial intelligence tools may assist in editing, enhancement, and optimization, including preparation for augmented, virtual, or mixed reality environments. Distribution and monetization may occur through multiple channels, including NFT minting with smart contracts that define royalties, licensing, and resale, subscription or pay-per-view access models, and brand sponsorships or advertisements that share revenue with creators. The system may further deliver immersive experiences by rendering content into AR, VR, or MR formats, enabling avatar-based interaction, and supporting live streaming with real-time audience engagement features such as chat, gifting, and polling. Integration with Web3 infrastructure may include token-gated access to exclusive content or events, decentralized storage for secure and permanent hosting, and automated financial transactions via blockchain. Audience engagement may be enhanced through behavioral tracking for personalized recommendations, gamification with token-based rewards, and community features including forums, live Q&A, and collaborative projects.

In some embodiments, user procedures may be adapted for different stakeholders. Creators may register, establish profiles linked to digital wallets, upload and tokenize content, set monetization terms, promote works across platforms, and monitor earnings and analytics. Audiences may create accounts, configure avatars and preferences, connect wallets, discover and purchase content or NFTs, participate in live or immersive events, and earn rewards for referrals and engagement. Brands and sponsors may partner with creators for co-branded content, run targeted advertisements or sponsor events, launch promotions to platform users, and track campaign performance through analytics dashboards. Collectively, this process may establish a comprehensive ecosystem that leverages AR/VR technologies, avatars, NFTs, and Web3 infrastructures to empower creators, engage audiences, and sustain digital economies.

In some embodiments, the automated processing and execution system (e.g., system 10 or 20) may support user procedures for employees and employers within a smart office environment. For employees, onboarding may include downloading a smart office application, creating a profile with work preferences, health goals, and dietary needs, and connecting wearables for health tracking. During daily workflow, the system may automatically adjust workspace conditions such as lighting, temperature, and music, while a smart calendar may manage tasks, meetings, and breaks, and focus modes may provide deep work playlists or immersive virtual workspaces. Health and wellbeing support may include real-time advisories for posture, hydration, and screen breaks, guided meditation or yoga sessions, and automated food ordering with calorie and medication tracking. Collaboration and events may be facilitated through meeting room booking with auto-adjusted audiovisual settings and personalized setups for clubs or workshops. At the end of the day, employees may review productivity and wellbeing statistics, schedule tasks, and set preferences for the following day.

For employers and facility managers, the system may enable onboarding of office infrastructure by installing sensors, smart devices, and IoT hubs, as well as integrating with human resources and wellness programs for data synchronization. Monitoring and optimization may be achieved through dashboards that track office usage, energy consumption, and employee wellbeing, with policies adjusted based on artificial intelligence recommendations. Event and workshop management may include automated scheduling of team-building activities, training sessions, and recreation, along with promotion of health initiatives. The system may further generate sustainability reports covering energy savings, carbon footprint, and employee satisfaction, which can be shared with stakeholders for environmental, social, and governance compliance. Data privacy and security may be supported by encryption protocols and regulatory compliance measures, including GDPR and local standards. Expected outcomes may include quantifiable improvements in productivity, employee satisfaction, energy efficiency, health and wellbeing, and collaboration.

### Implementation

In some embodiments, the automated processing and execution system (e.g., system 10 or 20) may provide a complete solution for addressing technical challenges associated with multi-functional service providers and cross-platform API integration. The system may connect business networks across industries, optimize the execution performance of triggers and actions in commercial workflows, and ensure stability of the data processing process. The technical solution may involve data-triggered load control, deduplication technology, distributed processing, and optimized use of REST Hook mechanisms. Collectively, these implementations may improve efficiency, reduce redundant operations, and enhance the reliability of workflow automation.

In some embodiments, the design and load control of data triggers may be optimized. A trigger may represent the initial step of a workflow and may be responsible for retrieving data from an integrated application and initiating execution. The system may improve this process by segmenting data, dynamically filtering records, and tailoring the data flow to different scenarios. For example, in test mode, condensed sample data may be returned, while in operational mode, API-based filters such as date or ID may be applied to control the amount of data. This load control mechanism may reduce system strain and enable faster responses in real-time applications.

In some embodiments, deduplication technology may be applied to avoid repeated operations on the same data. During each trigger startup, the system may automatically create a deduplication table, filter historical data, and retain only unique identifiers. This approach may prevent unnecessary repeated actions, reduce data transmission pressure, and enable more efficient initialization of workflows. The deduplication mechanism may employ lightweight indexing schemes or hash-based identifiers to ensure minimal overhead and high accuracy.

In some embodiments, REST Hook triggers may be optimized to improve the efficiency of instant notifications. REST Hook functionality may allow the system to deliver notifications when data changes occur, which is particularly beneficial in scenarios requiring frequent updates or real-time synchronization. To reduce load, the system may employ a dehydration and rehydration mechanism, whereby an initial notification transmits only a simplified summary of the data. When additional details are required, a dehydration pointer may be used to retrieve complete data on demand. This staged transmission may reduce the burden on networks and ensure that only necessary data is delivered at any given time.

The system may further include diversified API filtering, supporting conditions such as date, ID, or field-based selection, thereby reducing unnecessary transmission and improving performance across heterogeneous platforms. The technical framework may be deployed across multiple integration environments, including but not limited to browser extensions, applications, web programs, open-source connectors, and commercial ecosystems. Through these implementations, the invention may offer comprehensive solutions that can integrate enterprise applications, team workflows, and consumer-facing services.

In some embodiments, the system may further support classification and evaluation processes that quantify both tangible and intangible factors. For example, a dichotomy-based classification engine may be applied to split events into progressively smaller categories, each associated with parameters such as cost, time, pros (z1), and cons (z2). A calculation engine may process classification levels (n), coordinate definitions (X, Y), and additional subcategories (An, Bn, Cn) to generate tokenized values representing trade-offs under varying conditions. These tokens may capture results in both quantifiable units (e.g., time, money, materials) and non-quantifiable units (e.g., energy, light, influence, or social reach). The tokens may be visualized along coordinate axes and incorporated into judgment structures such as decision-making tables, enabling transparent and comparative evaluation of projects, strategies, or user wishes.

Through these specific implementation methods, the automated processing and execution system may ensure intelligent load control, prevent redundant actions, streamline notifications, and provide a flexible framework for evaluating both material and immaterial contributions within automated workflows.

### Method Flow Diagram

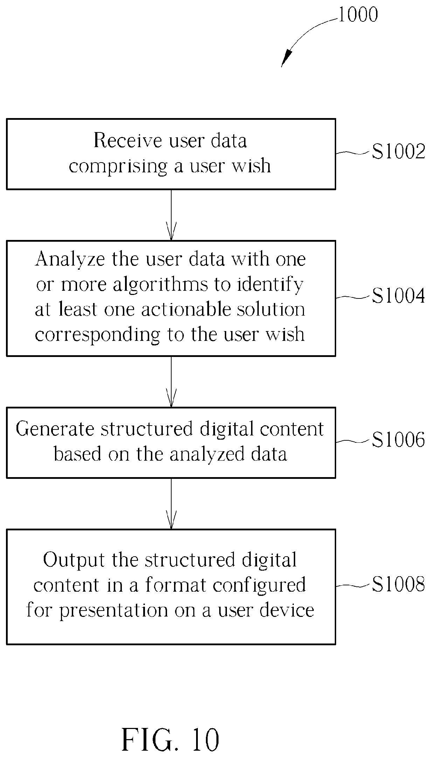

FIG. 10 illustrates a flow diagram of a computer-implemented method 1000 for automated processing and execution according to an embodiment. The method 1000 includes the following steps:

| | |
|---|---|
| S1002: | Receive user data comprising a user wish, |
| S1004: | Analyze the user data with one or more algorithms to identify at least one actionable solution corresponding to the user wish, |
| S1006: | Generate structured digital content based on the analyzed data, and |
| S1008: | Output the structured digital content in a format configured for presentation on a user device. |

At step S1002, user data comprising a user wish is received. The user data may include information relating to personal or enterprise objectives, categorization parameters, and contextual preferences, and may also include behavioral records or historical activity logs. The received data may be pre-processed or normalized to facilitate subsequent operations.

At step S1004, the user data is analyzed by one or more algorithms so that at least one actionable solution corresponding to the user wish can be identified. The analysis may be performed by applying statistical models, machine learning processes, or semantic matching engines, and may consider feasibility, engagement, and impact factors. During this step, available resources or collaborators may be matched to the user wish.

At step S1006, structured digital content is generated based on the analyzed data. The generated content may include execution plans, analytical reports, design templates, or other structured outputs suitable for guiding implementation of the actionable solution. In certain implementations, templates may be selected automatically, and connections to external systems may be leveraged for enhanced output.

At step S1008, the structured digital content is output in a format configured for presentation on a user device. The output may be rendered for display on web platforms, mobile applications, or enterprise dashboards, and may also be made available for distribution through public networks, private groups, or enterprise channels. Formatting and compatibility adjustments may be applied to ensure accurate and efficient presentation.

In some embodiments, user interaction and market response data may be analyzed to generate success metrics that provide quantitative and qualitative assessments of outcomes associated with a user wish. Success metrics may encompass engagement indicators such as view counts, participation rates, completion levels, and interaction frequency, as well as market fit indicators such as adoption trends, sales figures, or expert ratings. These metrics may be processed through statistical models or machine learning algorithms so that behavioral patterns can be identified, future performance predicted, and areas for improvement highlighted. The resulting success metrics may then be applied to refine subsequent executions by adjusting resource allocation, modifying content formats, or tailoring recommendations to better align with user needs and market demand.

In further embodiments, actionable solutions may be validated through mechanisms that provide transparency and collective input. Community voting may be conducted to capture feasibility or desirability assessments, expert reviews may be performed to evaluate technical or commercial soundness, and marketplace ranking may be applied to order projects according to efficiency, cost, or popularity criteria. Validation outcomes may operate as prerequisites for advancement of projects, and in certain cases, the validation process may enable direct funding or sponsorship. For example, projects that achieve favorable rankings or expert endorsements may be advanced to crowdfunding campaigns, institutional investment, or brand-backed sponsorships, thereby linking validation outcomes with financial enablement.

In addition, personal exploration activities may be incorporated to support long-term user growth alongside execution of wishes. Journaling modules may be employed for recording reflections and progress, assessments may be carried out to provide behavioral or psychological insights, and wellness tracking tools may be used to monitor posture, stress levels, exercise, or mindfulness activity. Personalized insights or tokenized rewards may be generated on the basis of these activities, creating a closed-loop feedback system that supports wish execution while enhancing spiritual, mental, and physical development. By integrating such activities with automated execution and community participation, a holistic framework may be established that connects technical automation with user-centered growth and engagement.

Through these steps, user wishes may be systematically received, analyzed, converted into structured outputs, and presented in a manner that enables execution and dissemination. The user wishes can be transformed into structured outputs while enabling validation, funding, feedback integration, and holistic development.

### Implementation

In some embodiments, the automated processing and execution system (e.g., system 10 or 20) may be realized using hardware, firmware, software, or any combination thereof. The form of implementation may depend on the intended application and associated design constraints. Hardware for such implementations may include, without limitation, central processing units (CPUs), graphics processing units (GPUs), tensor processing units (TPUs), digital signal processors (DSPs), application-specific integrated circuits (ASICs), field-programmable gate arrays (FPGAs), programmable logic devices (PLDs), gate logic, discrete components, or combinations thereof, configured to perform the described functions. A general-purpose processor may include a microprocessor, controller, microcontroller, or state machine, or a combination such as a digital signal processor in conjunction with a microprocessor. In certain cases, processes may be executed by function-specific circuitry optimized for performance, efficiency, or cost. Hardware selection may depend on requirements of the application, including speed, power consumption, cost, and physical size constraints.

In some embodiments, the system may be deployed through software and cloud-based infrastructures. The system may operate as a standalone application, a distributed service, or a software-as-a-service (SaaS) platform running in virtualized computing environments. Cloud resources may provide elastic compute, storage, and networking capabilities to scale the processing of user data, behavioral analysis, content generation, and automated execution workflows. Software components may be structured as microservices interconnected via application programming interfaces (APIs), enabling interoperability with third-party platforms, enterprise applications, and artificial intelligence services. Containerization and orchestration frameworks may support portability and resilience, while distributed databases or blockchain-based ledgers may ensure transparency, data integrity, and immutability.

In further embodiments, a hybrid implementation may be employed that combines local hardware resources with cloud-based infrastructures. Latency-sensitive tasks, such as data ingestion, preprocessing, or real-time execution, may be performed locally on CPUs, DSPs, ASICs, FPGAs, or PLDs. Computationally intensive or large-scale functions, such as training of machine learning models, marketplace validation, or ledger management, may be performed in the cloud. In some configurations, the system may operate in a synchronized mode, with local devices executing immediate control and feedback while cloud services provide long-term analytics, scalability, and integration with external APIs. This hybrid deployment may balance performance, power, cost, and scalability, enabling the system to flexibly adapt to diverse application environments.

In implementations where the system described in this specification collect user information, provisions may be made to protect user privacy and data. Specifically, users may be afforded the opportunity to opt in or out of programs or features that collect personal information, such as data related to user preferences or smart device usage patterns. Furthermore, in certain embodiments, data protection measures may be implemented to anonymize collected information prior to storage or utilization. For instance, a user's identity may be anonymized to prevent the determination or association of personally identifiable information with that specific user. Additionally, user preferences and interaction data may be generalized, potentially based on broader demographic categories, rather than being linked to individual users.

The aspects described in this specification can be implemented through both hardware and software instructions. These instructions may be stored on various types of computer-readable media, including but not limited to Random Access Memory (RAM), flash memory, Read Only Memory (ROM), Electrically Programmable ROM (EPROM), Electrically Erasable Programmable ROM (EEPROM), registers, hard disks, removable disks, CD-ROMs, or any other form of storage medium known in the art. In a typical configuration, the storage medium is connected to a processor, enabling the processor to read information from and write information to the medium. In some configurations, the storage medium may be integral to the processor itself.

### Additional Notes

The terminology used in this description is intended to explain particular embodiments and should not be viewed as limiting. The singular forms "a," "an," and "the" include plural forms unless the context clearly indicates otherwise. The term "and/or" covers any combination of listed items. Terms such as "includes," "including," "comprises," and "comprising" indicate the presence of stated features but do not exclude additional features or components.

Various modifications will be apparent to those skilled in the art, and the principles herein may apply to alternative embodiments without departing from the scope of this disclosure. The claims are intended to cover the widest scope consistent with the disclosed principles and features.

Embodiments may include explicitly disclosed features as well as optional features not described in detail. Conversely, some implementations may omit features not explicitly disclosed. Such omissions do not narrow the breadth of the claimed subject matter, provided that the disclosed features are present.

Features described separately may also be combined into a single implementation. Conversely, features described in a single embodiment may be divided into separate implementations or subcombinations. Even where combinations are initially claimed, one or more features may be removed or rearranged without departing from the invention.

Depictions of process sequences in the drawings should not be taken as strict requirements. Operations may occur in different orders or concurrently, and additional unillustrated operations may be inserted. Similarly, schematic diagrams and figures are illustrative, not to scale, and not intended as precise technical drawings. They facilitate understanding but do not limit the invention to the depicted arrangements.

Multitasking and parallel processing may be advantageous in certain cases. Described components may be shown as separate but could be integrated, depending on implementation needs. Software components may be packaged together or distributed across systems as appropriate. Other embodiments beyond those described are within the scope of the claims. The order of actions in the claims may vary while still achieving the desired outcomes. This flexibility in execution is part of the invention.

## Claims

1. A computer-implemented method for automated processing and execution, **characterised by** comprising:
receiving data of a user comprising a wish of a user;
analysing the data of the user with one or more algorithms to identify at least one actionable solution corresponding to the wish of the user;
generating structured digital content according to the analysed data; and
outputting the structured digital content in a format for presentation on a user device.

2. The method according to claim 1, **characterised in that** the data of the user comprises preferences, behavioural patterns, and market information.

3. The method according to any of claims 1 or 2, **characterised in that** the wish of the user comprises a defined goal and associated categorisation information.

4. The method according to any of claims 1 to 3, **characterised in that** the structured digital content comprises an execution plan, an impact analysis, a marketing analysis, and/or a design template.

5. The method according to claim 4, **characterised by** further comprising proposing an execution plan and initiating the execution plan via one or more execution agents, the one or agents comprising an application programming interface (API) and/or an artificial intelligence agent.

6. The method according to any of claims 1 to 5, **characterised by** further comprising formatting the structured digital content for dissemination through a channel comprising a public network, a private group, and/or an enterprise platform.

7. The method according to any of claims 1 to 6, **characterised by** further comprising analysing interaction data of the user and market response data associated with the structured digital content to generate success metrics.

8. The method according to claim 7, **characterised in that** the success metrics comprise engagement metrics, market fit indicators, and behavioural patterns.

9. The method according to claim 7 or 8, **characterised by** further comprising analysing content to determine thoughts, behaviours, and interests of the user, wherein the content comprises social media postings, images, and/or profile data.

10. The method according to any of claims 1 to 9, **characterised by** further comprising applying a machine learning model to correlate the wish of the user with digital resources, collaborators, or market opportunities.

11. The method according to any of claims 1 to 10, **characterised by** further comprising validating the actionable solution through a marketplace platform, the marketplace platform comprising a community voting, an expert review, or a ranking, and generating a feedback report accordingly.

12. The method according to claim 11, **characterised by** further comprising associating the wish of the user with the marketplace platform, wherein the marketplace platform further comprises crowdfunding and revenue sharing.

13. The method according to any of claims 1 to 12, **characterised by** further comprising storing the structured digital content in a blockchain ledger.

14. The method according to any of claims 1 to 13, **characterised by** further comprising tracking a growth of the user by recording journaling data, behavioural assessments, wellness information, and/or learning progress, and generating personalised insights or rewards accordingly.

15. A computer-implemented system (10, 20) for automated processing and execution, **characterised by** comprising a memory storing instructions and a processor coupled to the memory, when executing the instructions, the processor being configured to perform the method steps as defined in any of claims 1 to 14.
